# FASCICULE DE BREVET EUROPEEN

(11) **EP 2 507 747 B1**
(45) Date de publication et mention de la délivrance du brevet: **01.04.2015**
(21) Numéro de dépôt: 10801623.9
(22) Date de dépôt: 02.12.2010
(51) Int. Cl.: G06K 19/073, G06K 19/07, G06K 7/10

(54) **ACTIVATION ET INDICATION D'UN CHAMP RF SUR UN DISPOSITIF COMPRENANT UNE PUCE**
AKTIVIERUNG UND ANZEIGE EINES HF-FELDES AUF EINER VORRICHTUNG MIT EINEM CHIP
ACTIVATION AND INDICATION OF AN RF FIELD ON A DEVICE INCLUDING A CHIP

(30) Priorité: 03.12.2009 FR 0958645
(43) Date de publication de la demande: 10.10.2012
(73) Titulaire: UINT, F-91190 SAINT AUBIN (FR)
(72) Inventeur: BLOT, Philippe, F-78640 Neauphle le Château (FR); MOBETIE, Didier, F-78000 Versailles (FR); RENAUD, Jean-Charles, F-91640 Fontenay Les Briis (FR)
(74) Mandataire: Pontet Allano & Associes
(86) Numéro de dépôt international: PCT/FR2010/052601
(87) Numéro de publication internationale: WO 2011/067543

(56) Documents cités:
- EP-A1- 2 073 152
- JP-A- 2006 352 574
- US-A1- 2007 194 926

## Description

La présente invention se rapporte à une carte à puce à induction électromagnétique comprenant un dispositif d'activation et de désactivation de son antenne radiofréquence RF. Elle trouve une application particulièrement intéressante, mais non exclusivement, dans la technologie RFID Identification par Radio Fréquence (« Radio Frequency Identification » en anglais). L'invention concerne notamment une carte à puce sans contact de type NFC, Mifare, ISO 14443 ou 15693, c'est-à-dire ayant une antenne RF et émettant quand elle se trouve dans un champ électromagnétique approprié.

D'une façon générale, une carte RFID comprend une (ou plusieurs) puce électronique en silicium contenant des informations plus ou moins sensibles et relatives au porteur de la carte. Cette puce RFID est généralement connectée à une antenne. La carte RFID peut avoir le format d'une carte à puce classique, mais peut également revêtir différentes formes telles qu'un badge, une étiquette (« tag »), un porte-clés ou autre... Une batterie intégrée peut être prévue de façon à étendre les fonctionnalités de la carte.

La technologie RFID, basée sur le principe de l'induction électromagnétique est de plus en plus répandue dans la vie de tous les jours. Initialement utilisée pour la gestion des stocks, cette technologie a été massivement répandue dans le domaine du contrôle d'accès. Elle est en plein essor dans le domaine du passeport et du paiement. Au Japon par exemple, elle est très utilisée comme moyen de paiement par le protocole Felica. Aux Etats-Unis, les premiers terminaux de paiement basés sur le protocole ISO14443A ont déjà été déployés. Le déploiement en France est en cours aujourd'hui.

Malheureusement, cet engouement pour cette technologie s'est fait au détriment de l'aspect sécuritaire. La conséquence est qu'une personne mal intentionnée peut accéder librement aux informations contenues dans une puce RFID. Dans la mesure où une puce RFID devient active en présence d'un champ électromagnétique, il suffit de fabriquer un lecteur suffisamment puissant capable de récupérer les informations contenues dans des puces RFID environnantes. Ainsi, il est possible de récupérer, à l'insu du porteur, le numéro de carte bancaire ou toutes autres informations personnelles contenues dans un passeport par exemple.

Une solution simple consiste à rendre la puce RFID active uniquement à l'initiative du porteur. Ainsi, le risque de récupérer les données contenues dans la puce est considérablement réduit. Une méthode consiste à mettre un interrupteur au niveau de l'antenne afin de couper la communication quand les échanges RF ne sont pas nécessaires. Ce mécanisme peut être fait de plusieurs manières.

Le document US 2006/0017570 décrit un système permettant d'activer ou désactiver de façon mécanique la partie correspondant au transpondeur dans une puce ou carte RFID. Ce système concerne notamment des cartes comprenant une puce RFID ainsi qu'une bande magnétique. Le système permet de bloquer l'accès sans fil à la partie RFID tout en autorisant le fonctionnement magnétique. Pour bloquer l'accès, ce système propose un moyen de protection magnétique, un écran magnétique fait d'un matériau de perméabilité magnétique relative élevée que l'on place devant ou autour de l'antenne de façon à éviter toute réception de signaux extérieurs.

Le document US 2006/0132313 décrit un premier mode de réalisation où l'on détruit ou désactive de façon irréversible la puce RFID en détachant physiquement l'antenne du reste de la puce. Un deuxième mode consiste à réduire considérablement la portée de fonctionnement de l'antenne RFID de sorte que tout accès à la puce RFID doit se faire de manière très proche, donc à la connaissance de l'utilisateur. Pour ce faire, il est notamment prévu de couvrir de façon réversible au moins une partie de l'antenne avec une feuille de matériau isolant de façon à limiter considérablement les performances de l'antenne.

Le document WO 2006/031531 décrit un système pour activer et désactiver une puce RFID par connexion et déconnexion de l'antenne. Pour ce faire, on utilise une bande conductrice qui vient connecter ou non l'antenne avec la puce RFID. Cette bande conductrice peut être commandée par un aimant. Ce document concerne en particulier le fait d'activer ou d'activer une puce RFID à partir d'un dispositif de désactivation initialement prévu pour une étiquette antivol.

Le document EP1918859 décrit une carte de brouillage pour empêcher qu'un lecteur lise des données contenues dans une puce RFID par exemple.

Dans ce système, la carte à puce RFID n'est pas modifiée, mais on ajoute une nouvelle carte de brouillage qui est destinée à émettre un signal pour brouiller la lecture des données contenues dans la puce RFID. Cette seconde carte de brouillage peut être activée ou désactivée au moyen d'un interrupteur mécanique ou électronique tel qu'un transistor commandé.

Le document WO 2009/100005 décrit un système pour accorder ou désaccorder l'antenne d'une puce RFID. Ce système comprend un interrupteur qui modifie l'impédance de l'antenne de sorte que lorsque l'interrupteur est en position fermée, l'impédance présente une valeur pour laquelle l'antenne est accordée et la transmission peut avoir lieu. Par contre lorsque l'interrupteur est en position ouverte, l'impédance de l'antenne présente une valeur pour laquelle l'antenne est désaccordée, ce qui rend impossible l'émission de signal.

On connaît le document EP 2 073 152 A1 décrivant un système avertisseur pour signaler la présence d'une communication radiofréquence. Ce dispositif se distingue en ce que l'indicateur comprend un vibreur. L'indicateur est perceptible par l'utilisateur et est activé par des moyens d'activation aptes à capter ou détecter de l'énergie provenant de la communication radiofréquence si elle est présente.

On connaît le document US 2007/194926 A1 décrivant une étiquette RFID réagissant aux stimuli externes en changeant d'état. L'étiquette est composée d'une antenne adaptée pour capter et émettre un signal RF, contient une ou plusieurs puces renfermant des informations. Certains modes de fonctionnement proposent un mécanisme d'activation et de désactivation de l'antenne principale.

Un premier objectif de l'invention est lié à un principe de précaution, c'est-à-dire réduire les émissions des cartes quand elles se trouvent à proximité d'un champ électromagnétique de lecteur et donc réduire la pollution d'onde RF.

Un autre objectif de l'invention est de proposer des solutions alternatives permettant d'activer ou désactiver une antenne d'une carte RFID.

On atteint au moins l'un des objectifs précités avec un dispositif comprenant :
- une antenne principale adaptée pour capter et émettre un signal radiofréquence dit signal RF, ce signal est par exemple un champ électromagnétique, un signal IR, un signal millimétrique, un signal hyperfréquence pour le WIFI, le GSM, l'UMTS ou autre,
- au moins une puce renfermant des informations et configurées pour émettre ces informations via l'antenne principale en réponse à une excitation d'un signal RF externe, et
- un mécanisme d'activation et de désactivation de l'antenne principale ;
- un circuit de détection pour détecter la présence du signal RF externe, et
- un circuit indicateur, relié au circuit de détection, pour indiquer cette présence.

L'invention est caractérisée en ce que le mécanisme d'activation et de désactivation et le circuit de détection sont disposés de sorte que le mécanisme d'activation et de désactivation n'active l'antenne principale qu'à la double condition de recevoir une consigne d'activation provenant de l'utilisateur et que le circuit de détection signale la présence d'un signal RF. Avantageusement, lorsque l'une des deux conditions n'est plus vérifiée, le mécanisme d'activation et de désactivation désactive automatiquement l'antenne principale. Cela peut être mis en oeuvre par un circuit de traitement électronique ou en mettant en série le circuit de détection et le mécanisme d'activation et de désactivation.

La présente invention est notamment remarquable par le fait qu'elle a identifié un nouveau problème qui est à quel moment le porteur doit-il activer son dispositif qui peut avantageusement être une carte RFID. Dans les systèmes de l'art antérieur, pour activer sa carte RFID, le porteur devait s'assurer qu'il était en présence et proche d'un lecteur électromagnétique. Pour ce faire, il devait par exemple rechercher des panneaux ou toute indication mentionnant la présente d'un tel lecteur. Parfois, ce sont des personnes habilités à réaliser des contrôles qui signalaient une telle présence. Parfois, même à proximité d'un lecteur, aucun champ électromagnétique n'était accessible dans la carte car cette carte n'était pas suffisamment près du lecteur ou que tout simplement le lecteur n'était pas en fonctionnement.

Avec le dispositif selon la présente invention, c'est le dispositif qui signale au porteur que ce dernier est en présence d'un signal RF ou champ électromagnétique. Le porteur peut ainsi prendre la décision d'activer ou non sa carte. On évite toute manipulation inutile du dispositif. On prolonge ainsi sa durée de vie.

Selon une première variante de l'invention, le circuit de détection et le circuit indicateur sont connectés à ladite antenne principale.

Une seconde variante prévoit que le circuit de détection et le circuit indicateur soient connectés à une antenne secondaire indépendante de l'antenne principale. Cette antenne secondaire peut ainsi être spécifiquement dimensionnée pour son utilisation vis-à-vis du circuit de détection.

Le circuit de détection et le circuit indicateur peuvent être alimentés par induction magnétique via l'antenne avec laquelle ils sont connectés. On peut aussi prévoir pour l'ensemble de la carte ou pour le circuit de détection et le circuit indicateur seulement, une batterie intégrée ou de préférence une pile flexible ou non, rechargeable ou non. On peut par exemple envisager un capteur solaire pour recharger une pile photovoltaïque intégrée dans le dispositif.

Selon une caractéristique de l'invention, le mécanisme d'activation et de désactivation est un mécanisme monostable pour lequel l'état stable correspond à un état de désactivation de l'antenne principale, et l'état instable correspond à l'activation momentanée de l'antenne principale en réponse à une consigne. Cette consigne peut être le doigt de l'utilisateur sur un bouton poussoir pour activer l'antenne. Si l'utilisateur enlève son doigt, le bouton poussoir revient à son état stable qui est un circuit ouvert correspondant à la désactivation de l'antenne principale. On peut aussi envisager une consigne électronique commandant un interrupteur pour une durée prédéterminée. L'état activé de l'antenne principale est un état forcé par une action de l'utilisateur.

Avantageusement, le dispositif comprend un système d'horloge, doté d'un quartz par exemple, permettant de définir une durée pour laquelle le mécanisme d'activation et de désactivation maintient l'antenne principale en état activé. On instaure ainsi une temporisation automatique afin d'éviter que l'utilisateur maintienne inutilement trop longtemps l'antenne en état activé.

Le mécanisme d'activation et de désactivation peut avantageusement comprendre l'un ou plusieurs des éléments suivants dans la mesure où l'intégration de plusieurs éléments n'est pas incompatible :
- un bouton poussoir qui active l'antenne principale lorsque le bouton est pressé ;
- un capteur piézoélectrique qui active l'antenne principale lorsque ce capteur piézoélectrique reçoit une onde prédéterminée ; un capteur thermique, tel que par exemple un capteur solaire thermique qui active l'antenne principale lorsque ce capteur thermique est éclairé ; un capteur de lumière tel qu'un photo-détecteur, un capteur de mouvement tel qu'un accéléromètre, ou un capteur de pression, d'autres types de capteur environnemental peuvent être envisagés ;
- une interface homme-machine tel qu'un clavier permettant la saisie d'un code pin de façon à activer ou désactiver l'antenne principale après traitement du code pin ;
- une interface homme-machine tel qu'un capteur biométrique intégré permettant la détection de données biométriques de façon à activer ou désactiver l'antenne principale après traitement des données biométriques ; et
- un interrupteur bistable de type « on/off » qui active ou désactive l'antenne principale en fonction de la position de l'interrupteur.

Selon une caractéristique avantageuse de l'invention, le mécanisme d'activation et de désactivation comprend un interrupteur, tel qu'un des mécanismes décrit ci-dessus, associé à un composant électronique, l'ensemble interrupteur et composant électronique modifiant l'impédance de l'antenne principale de façon à accorder ou désaccorder l'antenne principale en fonction de la position de l'interrupteur. Ce mode de réalisation permet de modifier la fréquence de résonance de l'antenne principale de sorte que le signal RF émis par la puce en réponse à une excitation est incompréhensible pour tout lecteur RF.

Le composant électronique peut comprendre au moins un condensateur, au moins une résistance ou au moins une bobine, disposé en série, en parallèle ou dans un montage adapté pour perturber l'impédance de l'antenne.

Avantageusement, le circuit indicateur comprend des indicateurs sonores et/ou visuels. Les indicateurs sonores peuvent émettre un son particulier, une voix ou de la musique à partir d'un élément piézoélectrique. Les indicateurs visuels peuvent comprendre des DELS pour Diodes électroluminescentes.

De préférence, le dispositif selon l'invention comprend en outre un système d'affichage d'état, tel que des DELs, pour indiquer l'état dans lequel se trouve le dispositif quand il est activé, ces états sont:
- état actif en émission RF pendant une durée de temps prédéterminée,
- état de dialogue avec un lecteur RF, et
- état de non dialogue avec le lecteur RF.

On peut envisager une DEL par état ou une ou plusieurs DELs indiquant plusieurs états par changement de couleur et/ou de fréquence de clignotement.

Selon l'invention, les informations contenues dans la puce RFID comprennent une signature de type RF de type aléatoire ou dynamique pour des applications notamment dans les paiements, les authentifications fortes sur machine ou réseaux informatiques, les contrôles d'accès...

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique de l'électronique interne d'une carte à puce RFID selon l'invention avec un circuit de détection et un circuit d'affichage alimentés par l'antenne principale,
La figure 2 est une vue schématique de l'électronique interne d'une carte à puce RFID selon l'invention avec un circuit de détection et un circuit d'affichage alimentés par une antenne secondaire indépendante,
La figure 3 est une vue schématique de l'électronique interne d'une carte à puce RFID selon l'invention avec un mécanisme d'activation et de désactivation de l'antenne principale par modification d'impédance,
La figure 4 est une vue schématique de l'électronique interne d'une carte à puce RFID selon l'invention avec un mécanisme d'activation et de désactivation de l'antenne principale comprenant une interface homme-machine.

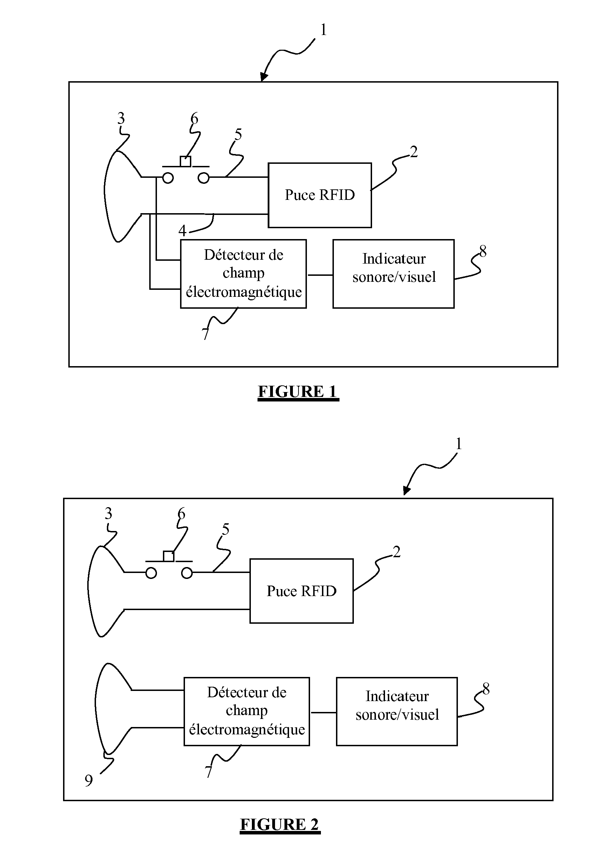

Sur les figures 1 à 4, les différents éléments communs aux diverses variantes ou formes de réalisation portent les mêmes références. Les modes de réalisation décrits ci-dessous concernent une carte RFID, mais le dispositif selon l'invention peut être sous différents formats tels qu'une clé USB, une étiquette électronique, un timbre ou « patch » médical, ou autres.

Sur la figure 1 on voit une carte à puce RFID 1 contenant une étiquette (« tag ») ou puce RFID 2 dans laquelle sont stockées des informations sensibles sur l'utilisateur de la carte. Ces informations sont destinées à être lues par un lecteur de carte RFID à distance par champ électromagnétique. Cette carte RFID peut être passive, c'est-à-dire alimentée par excitation du champ magnétique émise par un lecteur proche ; active, c'est-à-dire dotée de moyens d'alimentation intégrés ; ou semi-active, c'est-à-dire comprenant des moyens pour alimenter une partie seulement des éléments contenus dans la carte.

La carte RFID 1 de la figure 1 est avantageusement alimentée par le champ électromagnétique provenant d'un lecteur. Cette alimentation en énergie se fait via l'antenne principale 3 qui sert aussi d'antenne d'émission RF des informations sensibles contenues dans la puce RFID 2.

La puce RFID 2 et l'antenne principale 3 sont reliées entre elles au moyen :
- d'une première liaison permanente 4 depuis une première extrémité de l'antenne principale 3 vers une première entrée de la puce RFID 2, et
- d'une seconde liaison interrompu 5 depuis une seconde extrémité de l'antenne principale 3 vers une seconde entrée de la puce RFID 2.

La seconde liaison est interrompue par un bouton poussoir 6 qui constitue un mécanisme d'activation et de désactivation de l'antenne principale 3. L'invention est notamment remarquable par le fait qu'en état de repos, le bouton poussoir 6 est en positon ouvert, ce qui signifie que l'antenne n'est pas reliée à la puce RFID 2 par les deux entrées. Ainsi, en état « normal » ou de repos, la puce RFID 2 selon l'invention, même se trouvant proche d'un lecteur électromagnétique, est incapable de transmettre un moindre signal car son antenne principale 3 n'est pas active. Par conséquent, même se trouvant dans un environnement proche d'un lecteur, la transmission des informations sensibles nécessite une action de l'utilisateur qui reste ainsi maître de communiquer ou non ces informations sensibles.

Cependant, il n'est pas toujours possible de se rendre compte que l'on se trouve proche d'un lecteur électromagnétique. Parfois, on désire s'assurer qu'un lecteur électromagnétique identifié est en mode de lecture avant de lui transmettre toute information et d'éviter toute manipulation inutile.

Pour ce faire, la présente invention divulgue un circuit de détection de champ électromagnétique 7 pour détecter la présence d'un champ électromagnétique dans l'environnement de la carte RFID 1. Ce circuit peut être alimenté par une batterie intégrée mais elle est avantageusement alimentée par l'antenne principale 3. En présence de champ électromagnétique, le circuit de détection 7 génère un signal de présence vers un circuit indicateur 8 qui peut être une DEL ou un transducteur émettant un signal sonore remarquable. L'action du circuit indicateur 8 alerte alors l'utilisateur de la présence effective d'un champ électromagnétique. L'utilisateur peut ensuite activer le bouton poussoir 6 afin de permettre la transmission des informations sensibles via l'antenne principale 3.

Sur la figure 2 on voit une variante du système de la figure 1. Le circuit de détection 7 sur la figure 2 est relié à une antenne secondaire 9 indépendante de l'antenne principale 3. De ce fait, ce circuit de détection 7 n'est relié à aucun moment à la puce RFID 2.

Le bouton poussoir 6 peut être remplacé par tout type de mécanisme mécanique ou électronique (transistor commandé) tel que par exemple tout interrupteur monostable (revenant en son état initial en absence de contrainte) ou bistable (nécessitant une commande pour passer d'un état à un autre).

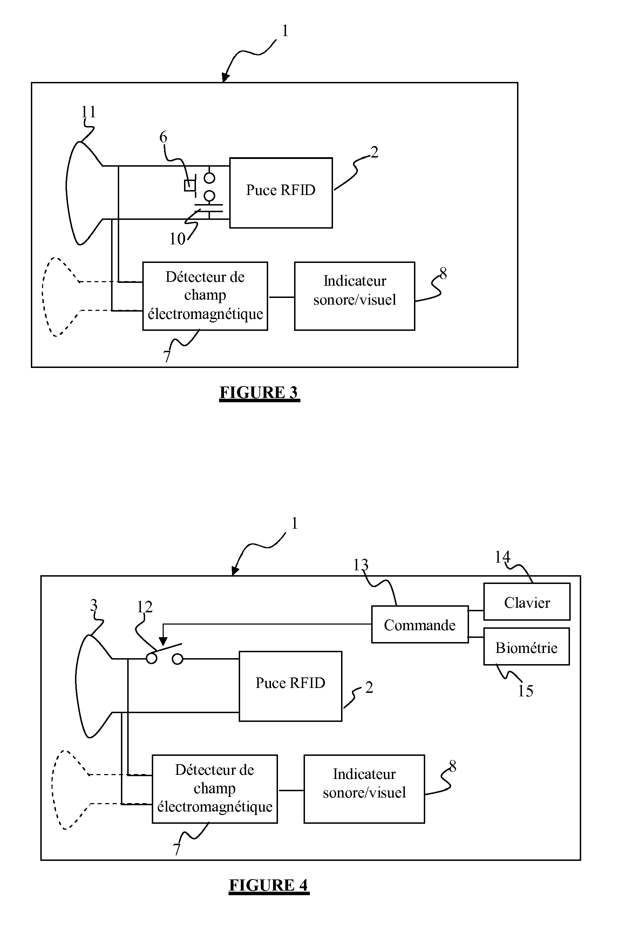

Sur la figure 3 on voit un exemple de la réalisation d'une carte telle que définie sur la figure 1 mais avec un bouton poussoir qui est remplacé par un mécanisme permettant d'accorder ou de désaccorder une antenne principale 11. Plutôt que d'interrompre la connexion entre l'antenne principale 3 et la puce RFID 2 comme sur la figure 1, on modifie ici l'impédance de l'antenne principale 11 de façon à la rendre hors d'usage, ce qui correspond à un état de désactivation. Plus précisément, l'antenne principale 11 est dimensionnée de telle sorte que lorsqu'elle est directement connectée aux bornes de la puce RFID 2, l'information provenant de la puce RFID 2 n'est pas correctement transmise au point d'être indétectable par tout lecteur électromagnétique. On dit que l'antenne principale 11 est désaccordée. En fait, son impédance est mal dimensionnée en connexion directe. Pour accorder l'antenne principale 11, un condensateur doit être disposé en parallèle de l'antenne principale 11. Ainsi, le mécanisme d'activation et de désactivation de la figure 3 comprend un condensateur 10 en série avec le bouton poussoir 6, mais l'ensemble condensateur 10 et bouton poussoir 6 est disposé en parallèle de l'antenne principale 11.

Lorsque le bouton poussoir est en position ouverte, le condensateur 10 n'a pas d'incidence réelle. L'antenne principale 11 est alors en connexion directe avec la puce RFID 2, et elle se trouve ainsi en état désactivé ou désaccordé. Par contre, lorsque l'utilisateur presse le bouton poussoir 6 de façon à le mettre en position fermée, le condensateur 10 se trouve effectivement en parallèle de l'antenne principale 11, et ce dernier se trouve ainsi accordée et prête à émettre correctement les informations sensibles de la puce RFID 2. Le mode de réalisation de la figure 2 est bien entendu compatible avec le mode de réalisation de la figure 3.

Sur la figure 4, on voit un exemple de réalisation où le bouton poussoir est remplacé dans le mode de réalisation de la figure 1 par un mécanisme d'activation et de désactivation intégrant des interfaces homme-machine. Ce mécanisme d'activation et de désactivation est compatible avec les modes de réalisation des figures 2 et 3. On distingue un interrupteur commandé 12 qui est disposé à l'endroit où était installé le bouton poussoir précédemment. Cet interrupteur est relié à un circuit de traitement et de commande 13 qui effectue des analyses comparatives entre des données sauvegardées et des données provenant des deux interfaces homme-machine 14 et 15. Une analyse comparative consiste à vérifier si les données provenant des interfaces homme-machine 14 et 15 sont valides afin de commander la fermeture de l'interrupteur commandé 12. L'interface homme-machine 14 est un clavier mais peut être tout autre type d'interface de saisie de données par l'utilisateur. En particulier, l'utilisateur utilise une telle interface pour saisir un code PIN secret permettant de l'identifier auprès du circuit de traitement et de commande 13.

L'interface homme-machine 15 est un circuit biométrique et son capteur correspondant. L'utilisateur peut ainsi être parfaitement identifié en fonction de ses caractéristiques biologiques telles que les empreintes digitales, les traits du visage, etc...

Bien sûr, l'invention n'est pas limitée aux exemples qui viennent d'être décrits et de nombreux aménagements peuvent être apportés à ces exemples sans sortir du cadre de l'invention. On peut ainsi envisager appliquer la présente invention à des cartes RFID comprenant une batterie et/ou alimentées par induction électromagnétique. On peut également appliquer la présente invention à la télémédecine où le dispositif selon l'invention est un élément adhésif ou sous-cutané adapté pour transmettre des informations préenregistrées ou des informations détectées telles que le rythme cardiaque d'un utilisateur.

## Revendications

1. Dispositif comprenant :
- une antenne principale (3) adaptée pour capter et émettre un signal radiofréquence dit signal RF,
- au moins une puce (2) renfermant des informations et configurée pour émettre ces informations via l'antenne principale en réponse à une excitation d'un signal RF externe,
- un mécanisme (6) d'activation et de désactivation de l'antenne principale,
- un circuit (7) de détection pour détecter la présence du signal RF externe, et
- un circuit indicateur (18), relié au circuit de détection, pour indiquer cette présence,
**caractérisé en ce que** le mécanisme d'activation et de désactivation et le circuit de détection sont disposés de sorte que le mécanisme d'activation et de désactivation n'active l'antenne principale qu'à la double condition de recevoir une consigne d'activation provenant de l'utilisateur et que le circuit de détection signale la présence d'un signal RF.

2. Dispositif selon la revendication 1, **caractérisé en ce que** le circuit (7) de détection et le circuit indicateur sont connectés à ladite antenne principale.

3. Dispositif selon la revendication 1, **caractérisé en ce que** le circuit (7) de détection et le circuit indicateur sont connectés à une antenne secondaire (9) indépendante de l'antenne principale.

4. Dispositif selon la revendication 1, **caractérisé en ce que** le circuit de détection (7) et le circuit indicateur (8) sont alimentés par une pile flexible ou non, rechargeable ou non.

5. Dispositif selon l'une quelconque des revendications précédentes, **caractérisé en ce que** le mécanisme d'activation (6) et de désactivation est un mécanisme monostable pour lequel l'état stable correspond à un état de désactivation de l'antenne principale (3), et l'état instable correspond à l'activation momentanée de l'antenne principale (3) en réponse à une consigne.

6. Dispositif selon l'une quelconque des revendications précédentes, **caractérisé en ce qu'**il comprend un système d'horloge permettant de définir une durée pour laquelle le mécanisme d'activation (6) et de désactivation maintient l'antenne principale (3) en état activé.

7. Dispositif selon l'une quelconque des revendications précédentes, **caractérisé en ce que** le mécanisme d'activation (6) et de désactivation comprend un bouton poussoir qui active l'antenne principale (3) lorsque le bouton est pressé.

8. Dispositif selon l'une quelconque des revendications précédentes, **caractérisée en ce que** le mécanisme d'activation (6) et de désactivation comprend : un capteur piézoélectrique qui active l'antenne principale (3) lorsque ce capteur piézoélectrique reçoit une onde prédéterminée, un capteur thermique, un capteur de lumière, un capteur de mouvement, ou un capteur de pression.

9. Dispositif selon l'une quelconque des revendications précédentes, **caractérisé en ce que** le mécanisme d'activation et de désactivation comprend une interface homme-machine tel qu'un clavier (14) permettant la saisie d'un code pin de façon à activer ou désactiver l'antenne principale (3) après traitement du code pin.

10. Dispositif selon l'une quelconque des revendications précédentes, **caractérisé en ce que** le mécanisme d'activation et de désactivation (12) comprend une interface homme-machine tel qu'un capteur biométrique (15) intégré permettant la détection de données biométriques (15) de façon à activer ou désactiver l'antenne principale (3) après traitement des données biométriques (15).

11. Dispositif selon l'une quelconque des revendications précédentes, **caractérisé en ce que** le mécanisme d'activation et de désactivation (6) comprend un interrupteur bistable de type on/off qui active ou désactive l'antenne principale (3) en fonction de la position de l'interrupteur.

12. Dispositif selon l'une quelconque des revendications précédentes, **caractérisé en ce que** le mécanisme d'activation et de désactivation (6) comprend un interrupteur (6) associé à un composant électronique (10), l'ensemble interrupteur et composant électronique modifiant l'impédance de l'antenne principale de façon à accorder ou désaccorder l'antenne principale (3) en fonction de la position de l'interrupteur (6).

13. Dispositif selon la revendication 12, **caractérisée en ce que** le composant électronique (10) comprend au moins un condensateur, au moins une résistance ou au moins une bobine.

14. Dispositif selon l'une quelconque des revendications précédentes, **caractérisé en ce que** le circuit indicateur (8) comprend des indicateurs sonores et/ou visuels.

15. Dispositif selon l'une quelconque des revendications précédentes, **caractérisé en ce qu'**il comprend un système d'affichage d'état, tel que des DELs, pour indiquer l'état dans lequel se trouve le dispositif quand il est activé, ces états sont:
- état actif en émission RF pendant une durée de temps prédéterminée,
- état de dialogue avec un lecteur RF, et
- état de non dialogue avec le lecteur RF.

16. Dispositif selon l'une quelconque des revendications précédentes, **caractérisé en ce que** les informations comprennent une signature de type RF de type aléatoire ou dynamique.

17. Dispositif selon l'une quelconque des revendications précédentes, **caractérisé en ce qu'**il est sous un format de carte à puce, de clé USB, ou d'étiquette électronique.

## Patentansprüche

1. Vorrichtung, umfassend:
- eine Hauptantenne (3), die dazu ausgelegt ist, ein Radiofrequenzsignal, sogenanntes RF-Signal, zu erfassen und zu senden,
- wenigstens einen Chip (2), der Informationen enthält und dazu ausgebildet ist, diese Informationen über die Hauptantenne als Reaktion auf eine Anregung eines externen RF-Signals zu senden,
- einen Mechanismus (6) zur Aktivierung und zur Deaktivierung der Hauptantenne,
- einen Erfassungsschaltkreis (7) zur Erfassung des Vorliegens des externen RF-Signals und
- einen Anzeigeschaltkreis (18), der mit dem Erfassungsschaltkreis verbunden ist, zum Anzeigen dieses Vorliegens,
**dadurch gekennzeichnet, dass** der Mechanismus zur Aktivierung und zur Deaktivierung sowie der Erfassungsschaltkreis derart angeordnet sind, dass der Mechanismus zur Aktivierung und zur Deaktivierung die Hauptantenne nur unter der zweifachen Bedingung aktiviert, dass eine von dem Benutzer stammende Aktivierungsanweisung empfangen wird und dass der Erfassungsschaltkreis das Vorliegen eines RF-Signals signalisiert.

2. Vorrichtung nach Anspruch 1, **dadurch gekennzeichnet, dass** der Erfassungsschaltkreis (7) und der Anzeigeschaltkreis mit der Hauptantenne verbunden sind.

3. Vorrichtung nach Anspruch 1, **dadurch gekennzeichnet, dass** der Erfassungsschaltkreis (7) und der Anzeigeschaltkreis mit einer von der Hauptantenne unabhängigen Nebenantenne (9) verbunden sind.

4. Vorrichtung nach Anspruch 1, **dadurch gekennzeichnet, dass** der Erfassungsschaltkreis (7) und der Anzeigeschaltkreis (8) über eine flexible oder nicht flexible, wiederaufladbare oder nicht wiederaufladbare Batterie gespeist werden.

5. Vorrichtung nach einem der vorhergehenden Ansprüche, **dadurch gekennzeichnet, dass** der Mechanismus zur Aktivierung und zur Deaktivierung (6) ein monostabiler Mechanismus ist, bei dem der stabile Zustand einem Zustand zur Deaktivierung der Hauptantenne (3) entspricht und der instabile Zustand der momentanen Aktivierung der Hauptantenne (3) als Reaktion auf eine Anweisung entspricht.

6. Vorrichtung nach einem der vorhergehenden Ansprüche, **dadurch gekennzeichnet, dass** sie ein Taktsystem umfasst, das ermöglicht, eine Dauer zu definieren, für die der Mechanismus zur Aktivierung und zur Deaktivierung (6) die Hauptantenne (3) in aktiviertem Zustand hält.

7. Vorrichtung nach einem der vorhergehenden Ansprüche, **dadurch gekennzeichnet, dass** der Mechanismus zur Aktivierung und zur Deaktivierung (6) einen Druckknopf umfasst, der die Hauptantenne (3) aktiviert, wenn der Knopf gedrückt wird.

8. Vorrichtung nach einem der vorhergehenden Ansprüche, **dadurch gekennzeichnet, dass** der Mechanismus zur Aktivierung und zur Deaktivierung (6) umfasst: einen piezoelektrischen Sensor, der die Hauptantenne (3) aktiviert, wenn dieser piezoelektrische Sensor eine vorbestimmte Welle empfängt, einen Wärmesensor, einen Lichtsensor, einen Bewegungssensor oder einen Drucksensor.

9. Vorrichtung nach einem der vorhergehenden Ansprüche, **dadurch gekennzeichnet, dass** der Mechanismus zur Aktivierung und zur Deaktivierung eine Mensch-Maschine-Schnittstelle, wie eine Tastatur (14) umfasst, die das Erfassen eines PIN-Codes ermöglicht, um die Hauptantenne (3) nach Verarbeitung des PIN-Codes zu aktivieren oder zu deaktivieren.

10. Vorrichtung nach einem der vorhergehenden Ansprüche, **dadurch gekennzeichnet, dass** der Mechanismus zur Aktivierung und zur Deaktivierung (12) eine Mensch-Maschine-Schnittstelle, wie einen integrierten biometrischen Sensor (15) umfasst, der die Erfassung von biometrischen Daten (15) ermöglicht, um die Hauptantenne (3) nach Verarbeitung der biometrischen Daten (15) zu aktivieren oder zu deaktivieren.

11. Vorrichtung nach einem der vorhergehenden Ansprüche, **dadurch gekennzeichnet, dass** der Mechanismus zur Aktivierung und zur Deaktivierung (6) einen bistabilen Schalter vom Typ Ein/Aus umfasst, der die Hauptantenne (3) in Abhängigkeit von der Position des Schalters aktiviert oder deaktiviert.

12. Vorrichtung nach einem der vorhergehenden Ansprüche, **dadurch gekennzeichnet, dass** der Mechanismus zur Aktivierung und zur Deaktivierung (6) einen Schalter (6), der einem elektronischen Bauelement (10) zugeordnet ist, umfasst, wobei die Anordnung aus Schalter und elektronischem Bauelement die Impedanz der Hauptantenne verändert, um die Hauptantenne (3) in Abhängigkeit von der Position des Schalters (6) einzustimmen oder zu verstimmen.

13. Vorrichtung nach Anspruch 12, **dadurch gekennzeichnet, dass** das elektronische Bauelement (10) wenigstens einen Kondensator, wenigstens einen Widerstand oder wenigstens eine Spule umfasst.

14. Vorrichtung nach einem der vorhergehenden Ansprüche, **dadurch gekennzeichnet, dass** der Anzeigeschaltkreis (8) akustische und/oder optische Anzeigen umfasst.

15. Vorrichtung nach einem der vorhergehenden Ansprüche, **dadurch gekennzeichnet, dass** sie ein Zustandsanzeigesystem, wie LEDs umfasst, um den Zustand anzuzeigen, in dem sich die Vorrichtung befindet, wenn sie aktiviert ist, wobei diese Zustände sind:
- aktiver RF-Sendezustand für eine vorbestimmte Zeitdauer,
- Zustand zum Dialog mit einem RF-Lesegerät und
- Zustand zum Nichtdialog mit dem RF-Lesegerät.

16. Vorrichtung nach einem der vorhergehenden Ansprüche, **dadurch gekennzeichnet, dass** die Informationen eine Signatur vom RF-Typ von der Art zufällig oder dynamisch umfassen.

17. Vorrichtung nach einem der vorhergehenden Ansprüche, **dadurch gekennzeichnet, dass** sie im Format einer Chipkarte, eines USB-Sticks oder eines elektronischen Etiketts vorliegt.

## Claims

1. A device including:
- a main antenna (3) suitable for capturing and transmitting a radio frequency signal called RF signal,
- at least one chip (2) containing information and configured for transmitting this information via the main antenna in response to an excitation of an external RF signal,
- a mechanism (6) for activating and deactivating the main antenna;
- a detection circuit (7) for detecting the presence of an external RF signal, and
- an indicator circuit (18), connected to the detection circuit, so as to indicate said presence,
**characterised in that** the activation and deactivation mechanism and the detection circuit are arranged so that the activation and deactivation mechanism only activates the main antenna on the double condition that it receives an activation instruction from the user and that the detection circuit reports the presence of an RF signal.

2. The device according to claim 1, **characterised in that** the detection circuit (7) and the indicator circuit are connected to said main antenna.

3. The device according to claim 1, **characterised in that** the detection circuit (7) and the indicator circuit are connected to a secondary antenna (9) independent of the main antenna.

4. The device according to claim 1, **characterised in that** the detection circuit (7) and the indicator circuit (8) are powered by a cell whether flexible or not, rechargeable or not.

5. The device according to any of the preceding claims, **characterised in that** the activation and deactivation mechanism (6) is a monostable mechanism for which the stable state corresponds to a deactivation state of the main antenna (3), and the unstable state corresponds to the momentary activation of the main antenna (3) in response to an instruction.

6. The device according to any of the preceding claims, **characterised in that** it includes a clock system enabling a period of time to be defined for which the activation and deactivation mechanism (6) maintains the main antenna (3) into the activated state.

7. The device according to any of the preceding claims, **characterised in that** the activation and deactivation mechanism (6) includes a push button which activates the main antenna (3) when the button is depressed.

8. The device according to any of the preceding claims, **characterised in that** the activation and deactivation mechanism (6) includes: a piezoelectric sensor which activates the main antenna (3) when this piezoelectric sensor receives a predetermined wave, a temperature sensor, a light sensor, a movement sensor or a pressure sensor.

9. The device according to any of the preceding claims, **characterised in that** the activation and deactivation mechanism includes a human-machine interface such as a keyboard (14) enabling a pin code to be keyed so as to activate or deactivate the main antenna (3) after processing the pin code.

10. The device according to any of the preceding claims, **characterised in that** the activation and deactivation mechanism (12) includes a human-machine interface such as an integrated biometric sensor (15) enabling biometric data (15) to be detected so as to activate or deactivate the main antenna (3) after processing the biometric data (15).

11. The device according to any of the preceding claims, **characterised in that** the activation and deactivation mechanism (6) includes an on/off type bistable switch which activates or deactivates the main antenna (3) depending on the switch position.

12. The device according to any of the preceding claims, **characterised in that** the activation and deactivation mechanism (6) includes a switch (6) associated with an electronic component (10), the switch-electronic component assembly modifying the impedance of the main antenna so as to tune or detune the main antenna (3) depending on the switch (6) position.

13. The device according to claim 12, **characterised in that** the electronic component (10) includes at least one capacitor, at least one resistor or at least one inductor.

14. The device according to any of the preceding claims, **characterised in that** the indicator circuit (8) includes audio and/or visual indicators.

15. The device according to any of the preceding claims, **characterised in that** it includes a state displaying system, such as LEDs, to indicate the state wherein the device is when it is activated, this state being:
- an RF transmission active state for a predetermined period of time,
- a dialogue state with an RF reader, and
- a non-dialogue state with the RF reader.

16. The device according to any of the preceding claims, **characterised in that** the information comprises a random or dynamic RF signature.

17. The device according to any of the preceding claims, **characterised in that** it is under the format of a chip card, USB key or electronic tag.
